# DEMANDE DE BREVET EUROPEEN

(11) **EP 0 631 929 A1**
(43) Date de publication de la demande: **04.01.1995**
(21) Numéro de dépôt: 94401463.8
(22) Date de dépôt: 28.06.1994
(51) Int. Cl.: B64C 25/34, B64C 25/12

(54) **Train d'atterrissage d'aéronef, du type à relevage latéral**

(30) Priorité: 01.07.1993 FR 9308070
(71) Demandeur: MESSIER-ERAM, F-78140 Velizy Villacoublay (FR)
(72) Inventeur: Derrien, Michel, F-78000 Versailles (FR)
(74) Mandataire: Jaunez, Xavier

(57) **Abrégé**

L'invention concerne un train d'atterrissage d'aéronef, du type à relevage latéral, et à roues en tandem.

Conformément à l'invention, la jambe (50) est formée d'un caisson rigide (10) ayant la forme générale d'un T en présentant un plan de symétrie (P), et de deux balanciers porteurs de roue (12.1, 12.2) articulés en extrémité du caisson, ces deux balanciers s'étendant de part et d'autre du plan de symétrie précité (P). Chaque balancier (12.1, 12.2) est en outre relié au caisson rigide (10) par un amortisseur associé (15.1, 15.2), avec de préférence un système à basculeur (20) et bielle de commande (21) permettant une rétraction de la roue arrière plus basse lors du relevage du train.

## Description

L'invention concerne les trains d'atterrissage d'aéronef, du type à relevage latéral, comportant une jambe articulée sur une structure d'aéronef et équipée inférieurement d'un train de roues, ainsi qu'un vérin de manoeuvre assurant le pivotement de cette jambe autour de son axe.

Le document FR-A-1.409.467 décrit un tel train d'atterrissage, dont la jambe est formée d'un caisson rigide en L renversé, en extrémité duquel sont articulés deux balanciers s'étendant respectivement vers l'avant et vers l'arrière, avec deux roues en diabolo ou une roue unique à l'extrémité de chaque balancier (disposition dite en tandem). L'un des balanciers (par exemple le balancier avant) est relié au caisson rigide par un amortisseur, l'autre balancier étant alors relié à cet amortisseur par l'intermédiaire d'une bielle et d'un basculeur articulé sur le caisson.

L'avantage de ce type d'atterrisseurs, notamment pour les atterrisseurs ne nécessitant que deux roues, par rapport à une solution de type diabolo, est de minimiser la taille du carénage constituant le logement des pneumatiques en position train rentré, et par suite de minimiser le maître-couple de l'avion.

Cependant, la structure de tels atterrisseurs reste encore complexe et encombrante, notamment s'il est nécessaire de prévoir un dispositif de raccourcissement de la jambe au relevage.

Enfin, les caissons rigides en L renversé ne sont pas interchangeables (le caisson de l'atterrisseur gauche et celui de l'atterrisseur droit sont en effet symétriques par rapport au plan longitudinal médian de l'aéronef), et les balanciers avant et arrière d'un même atterrisseur sont en général différents de par la disposition de leur articulation sur le caisson. Ceci alourdit donc les problèmes de stockage, de maintenance et d'outillage associés.

On connaît par ailleurs du document GB-A-796.267 un train à relevage vertical, constitué par une pièce de structure assimilable à un prolongement de la structure de l'avion, en extrémité inférieure de laquelle sont articulés deux balanciers porteurs de roues en diabolo. Le relevage des deux balanciers s'effectue par un système à leviers relié par deux amortisseurs aux deux balanciers et actionné par un vérin de manoeuvre commun, avec des mouvements obligatoirement identiques pour les balanciers avant et arrière.

L'invention a précisément pour but de résoudre ce problème en concevant un train d'atterrissage ne présentant pas les limitations et/ou inconvénients précités.

L'invention a ainsi pour objet de réaliser un train d'atterrissage particulièrement bien adapté à une disposition de roues en tandem, et dont la jambe est de structure simple et compacte.

L'invention a également pour objet de réaliser un tain d'atterrissage capable d'être long à l'atterrissage, et court au roulage et en position train rentré, sans complication notable de la structure, tout en restant fiable et précis pour la position train rentré.

Il s'agit plus particulièrement d'un train d'atterrissage d'aéronef, du type à relevage latéral, comportant une jambe articulée sur une structure d'aéronef et équipée inférieurement d'un train de roues, ainsi qu'un vérin de manoeuvre assurant le pivotement de cette jambe autour de son axe, caractérisé en ce que :
- la jambe est formée d'un caisson rigide articulé sur la structure d'aéronef, et de deux balanciers porteurs de roue articulés en extrémité du caisson en pouvant tourner autour d'un axe qui, en position train bas, est sensiblement perpendiculaire au plan longitudinal médian de l'aéronef, ledit caisson rigide ayant la forme générale d'un T en présentant un plan de symétrie, et les deux balanciers s'étendant de part et d'autre de ce plan de symétrie ;
- chaque balancier est en outre relié au caisson rigide, de part et d'autre du plan de symétrie précité, par un amortisseur associé qui est articulé sur le balancier correspondant en un point situé entre l'axe d'articulation dudit balancier et l'axe de roue associé.

De préférence, les deux balanciers d'une part, et les deux amortisseurs d'autre part ont des structures identiques, de façon à permettre une interchangeabilité avant/arrière et droite/gauche des composants de la jambe.

Avantageusement encore, l'amortisseur associé au balancier de la roue avant est articulé directement sur le caisson rigide, tandis que l'amortisseur associé au balancier de la roue arrière est articulé indirectement sur le caisson rigide, de préférence par l'intermédiaire d'un basculeur dont le pivotement est commandé par une bielle reliant ce basculeur à la structure d'aéronef, de telle façon que la roue arrière soit rétractée au relevage du train, et qu'en position train bas l'axe de roue arrière soit plus bas que l'axe de roue avant. Il est alors intéressant de prévoir qu'en position train bas, le basculeur est disposé dans un plan vertical parallèle au plan longitudinal médian de l'aéronef, et que l'amortisseur associé est disposé de telle façon que son axe soit dans ce plan vertical, de façon à minimiser les efforts exercés sur la bielle de commande ; cette bielle de commande peut en outre être alors disposée dans un plan essentiellement horizontal en position train bas.

De préférence encore, le caisson rigide comporte deux appendices d'articulation dont l'un est associé à l'amortisseur du balancier avant et l'autre au basculeur, qui sont agencés symétriquement par rapport au plan de symétrie du caisson. En particulier, les deux appendices d'articulation sont calés sur un axe commun qui est parallèle à l'axe de pivotement du caisson rigide, lequel axe est sensiblement parallèle à l'axe central de l'aéronef.

Par ailleurs, lorsqu'il est prévu des moyens de contreventement associés à la jambe de train, il est intéressant que le train d'atterrissage comporte une contre-fiche articulée dont les deux bras sont dans le plan de symétrie du caisson rigide, et ce dans toutes les positions angulaires dudit caisson. De préférence alors, une contre-fiche secondaire d'alignement est en outre prévue entre la contre-fiche précitée et le caisson rigide, cette contre-fiche secondaire restant également dans le plan de symétrie dudit caisson.

Il sera également possible de prévoir deux bielles de reprise d'efforts, articulées en extrémité du caisson rigide et sur un point fixe respectif d'une couronne de frein associée à la roue concernée, ces deux bielles étant agencées au voisinage des deux balanciers en formant avec ces derniers un parallélogramme articulé.

Avantageusement enfin, le vérin de manoeuvre relie un appendice supérieur du caisson rigide à la structure d'aéronef en s'étendant dans un plan décalé par rapport au plan de symétrie dudit caisson.

D'autres caractéristiques et avantages de l'invention apparaîtront plus clairement à la lumière de la description qui va suivre et des dessins annexés, concernant un mode de réalisation particulier, en référence aux figures où :
- la figure 1 est une vue latérale d'un train d'atterrissage conforme à l'invention, en position train bas (le vérin de manoeuvre et les moyens de contreventement ne sont pas illustrés sur cette vue) ;
- la figure 2 est une vue frontale du train précité, avec la position train bas illustrée en trait continu et la position train haut (rentré) illustrée en traits mixtes ;
- la figure 3 est une coupe partielle selon III-III de la figure 1 montrant, en position train bas, l'accrochage de l'amortisseur associé au balancier de la roue arrière, qui comporte pour cet amortisseur un système à rétraction avec basculeur et bielle de commande (la position train haut est en partie esquissée en traits mixtes) ;
- les figures 4 et 5 sont des vues partielles, selon la flèche F de la figure 2, montrant respectivement la contre-fiche principale et la contre-fiche secondaire d'alignement, dans un état déplié correspondant à la position train bas.

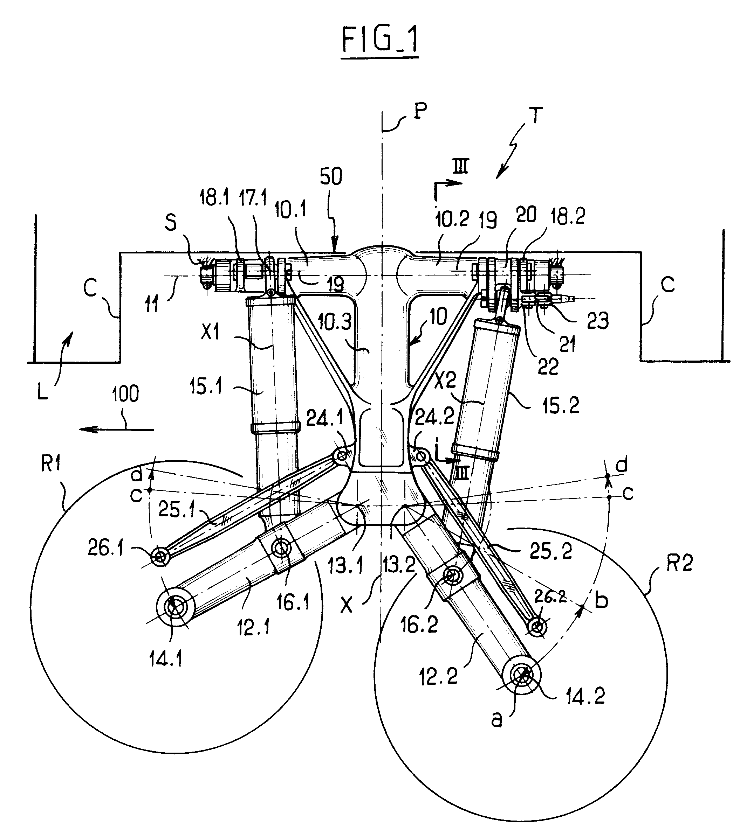

On va maintenant décrire, en se référant aux figures 1 à 5, un tain d'atterrissage T conforme à l'invention, ledit train étant du type à relevage latéral et étant reçu, en position train haut, dans un logement associé L de la structure d'aéronef concernée, ledit logement étant délimité par deux voiles transversaux C.

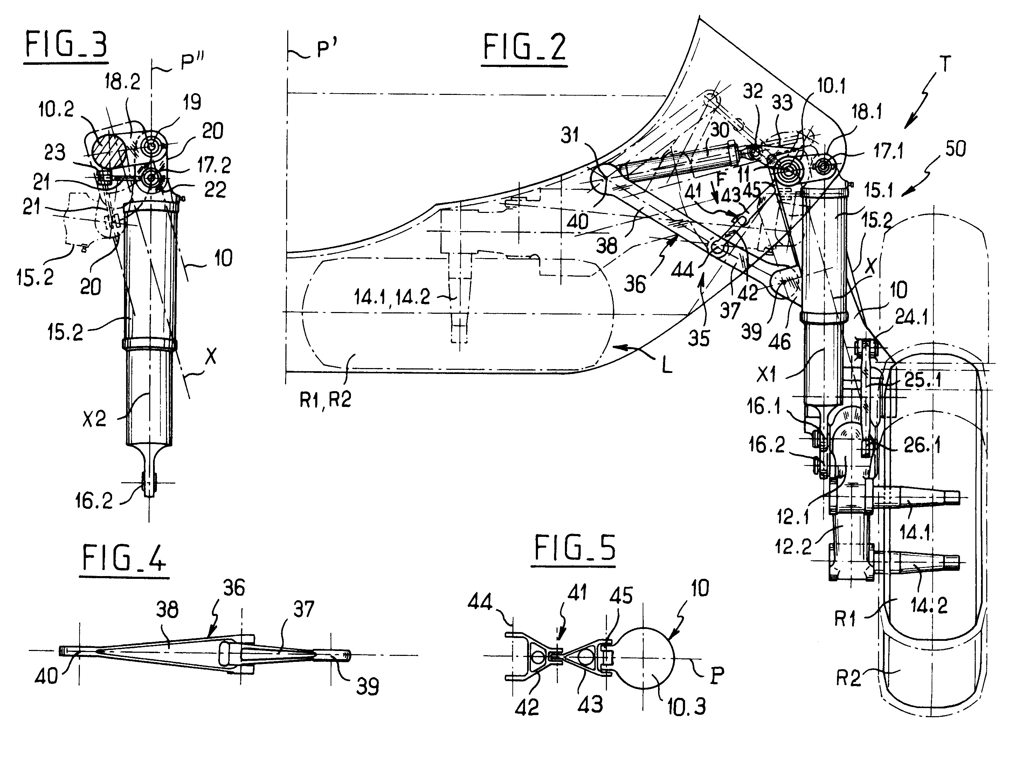

Le train d'atterrissage T comporte une jambe 50 articulée sur une structure d'aéronef S et équipée inférieurement d'un train de roue R1 et R2, ainsi qu'un vérin de manoeuvre 30 (visible seulement sur la figure 2) assurant le pivotement de cette jambe autour de son axe. Sur la figure 1, la direction avant est repérée par la flèche 100.

La jambe 50 est formée d'un caisson rigide 10 ayant la forme générale d'un T, avec deux branches latérales 10.1 et 10.2 disposées de part et d'autre d'un plan de symétrie P, et une branche centrale 10.3 dont l'axe X est dans le plan P précité. Le caisson rigide 10 est monté pour pivoter autour d'un axe 11, lequel axe est sensiblement parallèle à l'axe central de l'aéronef. Deux balanciers 12.1, 12.2 sont articulés en extrémité du caisson 10, en pouvant tourner autour d'un axe, respectivement 13.1, 13.2 qui, en position train bas, est sensiblement perpendiculaire au plan longitudinal médian P' de l'aéronef (le plan P' n'est visible que sur la figure 2). Les deux balanciers 12.1, 12.2 s'étendent ainsi de part et d'autre du plan de symétrie P, et présentent à leur extrémité un axe de roue 14.1, 14.2 sur lequel est montée une roue respectivement R1 ou R2.

Sur les figures, on a représenté un train d'atterrissage T dont la jambe 50 est équipée d'un train de deux roues R1, R2 disposées en tandem, c'est-à-dire l'une directement derrière l'autre. Il va de soi cependant que cet agencement de train pourrait être envisagé avec un diabolo de deux roues monté en extrémité de chaque balancier, mais ceci impliquerait un encombrement en hauteur plus important lorsque le train est rentré, et générerait un maître-couple plus important.

Chaque balancier 12.1, 12.2 est en outre relié au caisson rigide 10, de part et d'autre du plan de symétrie P dudit caisson, par un amortisseur associé 15.1, 15.2 qui est articulé sur le balancier correspondant en un point 16.1, 16.2 situé entre l'axe d'articulation 13.1, 13.2 dudit balancier et l'axe de roue 14.1, 14.2 associé.

La symétrie du caisson rigide 10 est intéressante dans la mesure où l'on dispose d'une structure à la fois compacte et robuste, et où ce caisson peut être indifféremment utilisé pour un atterrisseur droit ou un atterrisseur gauche. De même, les deux balanciers 12.1, 12.2 d'une part, et les deux amortisseurs 15.1, 15.2 d'autre part, ont de préférence des structures identiques, de façon à permettre une interchangeabilité avant/arrière et droite/gauche de ces composants.

Ainsi que cela est visible sur les figures 1 et 2, le train d'atterrissage T est agencé de telle façon qu'en position train bas, la roue arrière R2 est plus basse que la roue avant R1, ce qui permet d'avoir un train qui est à la fois long à l'atterrissage, et court au roulage dans la mesure où les deux axes de roue 14.1, 14.2 sont disposés parallèlement au sol lorsque l'aéronef roule sur piste. Toutefois, si l'on ne prévoyait aucune mesure particulière, un tel agencement des deux roues du train d'atterrissage induirait la nécessité de prévoir un logement L important, avec un encombrement latéral adapté pour recevoir le train en position rentré.

Pour éviter cet inconvénient, on a prévu, dans le cadre de l'invention, un moyen d'accrochage particulier de l'amortisseur 15.2 associé au balancier 12.2 de la roue arrière R2, ce moyen étant tel que la roue arrière R2 soit automatiquement rétractée au relevage du train.

L'amortisseur 15.1 associé au balancier 12.1 de la roue avant R1 est ainsi articulé directement, à son extrémité 17.1, sur un appendice 18.1 du caisson 10, tandis que l'amortisseur 15.2 associé au balancier 12.2 de la roue arrière R2 est articulé indirectement sur ledit caisson rigide. Ce dernier amortisseur 15.2 est en effet articulé, à son extrémité 17.2, sur un basculeur 20 monté pivotant autour d'un axe 19 défini par un appendice 18.2 du caisson rigide 10. Il convient naturellement d'organiser la commande du pivotement de ce basculeur 20, de façon à synchroniser la rétraction de la roue arrière R2 avec le relevage du train d'atterrissage. Ceci est obtenu grâce à une bielle de commande 21 reliant une liaison tournante 22 montée sur le basculeur 20 à une liaison tournante 23 montée sur la structure d'aéronef.

Ainsi que cela est visible sur la vue partielle de la figure 3, l'agencement est tel que le basculeur 20 est disposé, en position train bas, dans un plan vertical P'' qui est parallèle au plan longitudinal médian de l'aéronef P', et l'amortisseur associé 15.2 est disposé de telle façon que son axe X2 soit dans ce plan vertical P'' : cet agencement est particulièrement simple, et il permet en outre de minimiser les efforts exercés sur la bielle de commande 21 lorsque les roues sont au contact de la piste. Ainsi que cela est visible sur les figures 1 et 3, la bielle de commande 21 est avantageusement disposée, lorsque le train est en position train bas, dans un plan essentiellement horizontal. Sur la figure 3, la partie supérieure du caisson rigide 10 est seulement schématisée en traits mixtes, ainsi que, pour la position train haut, l'appendice du caisson, le basculeur et l'extrémité de l'amortisseur associé.

Grâce à cet agencement, les axes X1, X2 des amortisseurs 15.1, 15.2 sont contenus dans un plan vertical commun lorsque le train d'atterrissage est en position train bas (comme cela est visible sur la figure 2), et, lorsque le relevage du train est initié, le basculeur 20 et la bielle de commande associée 21 exerce une traction sur le balancier arrière 12.2, ce qui a pour effet d'amener l'axe 14.2 de la roue arrière d'une position a à une position b qui est parfaitement symétrique de la position de l'axe 14.1 de la roue avant (position amortisseur tout détendu, et avant rétraction pour cette roue avant). Grâce à cette rétraction de la roue arrière R2, les deux roues sont parfaitement alignées lorsque le train arrive dans sa position train haut, et l'ensemble du train peut alors être reçu dans un logement L particulièrement compact, ainsi que cela est visible sur la figure 2. La figure 2 permet en particulier de bien distinguer le décalage en position train bas entre les axes de roues 14.1, 14.2, lequel décalage a disparu en position train haut lorsque le train est rentré.

Il convient de noter que les deux appendices d'articulation 18.1, 18.2 du caisson rigide 10, dont l'un est associé à l'amortisseur 15.1 du balancier avant, et l'autre au basculeur 20, sont identiques entre eux et agencés symétriquement par rapport au plan de symétrie P dudit caisson. Ainsi, la présence du basculeur d'un côté du plan de symétrie P ne vient pas rompre la symétrie du caisson rigide, et préserve l'interchangeabilité droite/gauche de ce caisson. Les deux appendices d'articulation 18.1, 18.2 sont naturellement calés sur un axe commun 19 qui est parallèle à l'axe de pivotement 11 du caisson rigide 10, lequel axe est sensiblement parallèle à l'axe central de l'aéronef.

On a représenté sur la figure 2 le vérin de manoeuvre qui assure le pivotement de la jambe 50 autour de son axe 11, ainsi que des moyens de contreventement 35 associés à ladite jambe.

On distingue ainsi le vérin de manoeuvre 30, dont le corps est articulé en 31 sur la structure d'aéronef, et dont la tige est articulée en 32 sur un appendice supérieur 33 du caisson rigide 10. Dans la pratique, le vérin de manoeuvre 30 pourra être agencé de façon à s'étendre dans un plan décalé par rapport au plan de symétrie P du caisson rigide, tout en conservant la possibilité de disposer l'appendice 33 dans ce plan de symétrie P, de façon à pouvoir disposer les moyens de contreventement 35 dans ledit plan de symétrie.

Les moyens de contreventement 35 associés à la jambe de train 50 comportent une contrefiche articulée 36, ou contrefiche principale, composée d'un bras 37 articulé en 39 sur un appendice 46 du caisson rigide 10, et d'un bras 38 articulé en 40 sur la structure d'avion, l'axe correspondant étant de préférence aligné avec l'articulation 31 du vérin de manoeuvre. Il est également prévu une contrefiche secondaire d'alignement 41, composée d'un bras 42 relié à la contrefiche principale 36 au niveau de l'articulation 44 des deux bras de celle-ci, et d'un bras 43 articulé sur un appendice associé 45 du caisson rigide 10.

De tels moyens de contreventement sont bien connus pour les trains d'atterrissage à relevage latéral, mais l'agencement de ces moyens est particulier dans le cadre de l'invention, dans la mesure où les deux bras 37, 38 de la contre-fiche principale 36 d'une part, et les deux bras 42, 43 de la contre-fiche secondaire d'alignement 41 d'autre part, sont dans le plan de symétrie P du caisson rigide 10, et ce dans toutes les positions angulaires dudit caisson. Les vues partielles des figures 4 et 5 permettent de mieux distinguer l'agencement des contre-fiches 36 et 41, ces deux contre-fiches restant dans le plan de symétrie P du caisson rigide. La figure 2 montre également, en traits mixtes, la position des moyens de contreventement en position train haut, avec en particulier ici un réalignement de la contrefiche secondaire 41, un tel réalignement pouvant par exemple permettre d'éviter la présence d'un boîtier d'accrochage.

Il va de soi que les moyens de contreventement, tout comme le vérin de manoeuvre, sont des composants qui sont interchangeables pour un atterrisseur droit ou gauche.

Ainsi que cela est mieux visible sur la figure 1, le train d'atterrissage P comporte en outre deux bielles 25.1, 25.2 de reprise d'efforts, qui sont articulées en extrémité du caisson rigide 10 au niveau d'appendices respectifs 24.1, 24.2 dudit caisson, et sur un point fixe respectif, noté respectivement 26.1, 26.2, d'une couronne de frein de la roue associée (non représentée ici), les deux bielles 25.1, 25.2 étant agencées au voisinage des deux balanciers 12.1, 12.2, c'est-à-dire directement au-dessus de ces deux balanciers en position train bas, en formant avec ces derniers un parallélogramme articulé. Les deux bielles 25.1, 25.2 ne sont naturellement aucunement obligatoires, si l'on admet un certain déséquilibre des charges entre l'équipage avant et l'équipage arrière conduisant à surdimensionner les freins, mais cette variante serait au détriment de la masse d'ensemble.

On dispose ainsi de deux parallélogrammes articulés s'étendant de part et d'autre du plan de symétrie P du caisson rigide, la disposition des deux balanciers 12.1, 12.2 et des deux bielles de reprise d'efforts 25.1, 25.2 étant parfaitement symétrique par rapport au plan P précité, lorsque les axes de roues sont au point c ou d qui correspondent respectivement à la position sous charge statique et à la position de compression maximale des deux amortisseurs. Il est à noter que, dans la position d, les axes X1 et X2 des amortisseurs 15.1 et 15.2 sont sensiblement verticaux. On retrouve naturellement cette symétrie lorsque l'axe 14.2 de la roue arrière passe de la position a à la position b dans le cadre de la rétraction de la roue arrière lors du relevage du train, mais les bielles de reprise d'efforts ne remplissent dans ce cas aucune fonction.

On est ainsi parvenu à réaliser un train d'atterrissage particulièrement bien adapté à une disposition de roues en tandem, train dont la jambe est de structure à la fois simple et compacte. Ce train est en outre capable d'être long à l'atterrissage et court au roulage et en position train rentré, sans complication notable de la structure, tout en restant fiable et précis pour la position train rentré, cette fiabilité étant obtenue en toute certitude grâce à la transmission de type desmodromique évitant toute séquence dans les mouvements de descente ou de relevage du train. Par ailleurs, il est possible de prévoir un calage différent pour les balanciers avant et arrière, ce qui permet d'optimiser la longueur de la partie arrière de l'atterrisseur pour favoriser le décollage. Enfin, la rétraction du balancier arrière est obtenue via un embiellage mécanique, à partir d'un point fixe de la structure de l'aéronef (en toute indépendance par rapport au vérin de manoeuvre), ce qui garantit une précision élevée des mouvements.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Train d'atterrissage d'aéronef, du type à relevage latéral, comportant une jambe articulée sur une structure d'aéronef et équipée inférieurement d'un train de roues, ainsi qu'un vérin de manoeuvre assurant le pivotement de cette jambe autour de son axe, caractérisé en ce que :
- la jambe (50) est formée d'un caisson rigide (10) articulé sur la structure d'aéronef, et de deux balanciers porteurs de roue (12.1, 12.2) articulés en extrémité du caisson (10) en pouvant tourner autour d'un axe (13.1, 13.2) qui, en position train bas, est sensiblement perpendiculaire au plan longitudinal médian de l'aéronef, ledit caisson rigide (10) ayant la forme générale d'un T en présentant un plan de symétrie (P), et les deux balanciers (12.1, 12.2) s'étendant de part et d'autre de ce plan de symétrie ;
- chaque balancier (12.1, 12.2) est en outre relié au caisson rigide (10), de part et d'autre du plan de symétrie (P) précité, par un amortisseur associé (15.1, 15.2) qui est articulé sur le balancier correspondant en un point (16.1, 16.2) situé entre l'axe d'articulation (13.1, 13.2) dudit balancier et l'axe de roue (14.1, 14.2) associé.

2. Train d'atterrissage selon la revendication 1, caractérisé en ce que les deux balanciers (12.1, 12.2) d'une part, et les deux amortisseurs (15.1, 15.2) d'autre part ont des structures identiques, de façon à permettre une interchangeabilité avant/arrière et droite/gauche des composants de la jambe (50).

3. Train d'atterrissage selon la revendication 1 ou la revendication 2, caractérisé en ce que l'amortisseur (15.1) associé au balancier (12.1) de la roue avant est articulé directement sur le caisson rigide (10), tandis que l'amortisseur (15.2) associé au balancier (12.2) de la roue arrière est articulé indirectement sur le caisson rigide (10), de préférence par l'intermédiaire d'un basculeur (20) dont le pivotement est commandé par une bielle (21) reliant ce basculeur à la structure d'aéronef, de telle façon que la roue arrière soit rétractée au relevage du train, et qu'en position train bas l'axe de roue arrière soit plus bas que l'axe de roue avant.

4. Train d'atterrissage selon la revendication 3, caractérisé en ce qu'en position train bas, le basculeur (20) est disposé dans un plan vertical (P'') parallèle au plan longitudinal médian de l'aéronef, et l'amortisseur associé (15.2) est disposé de telle façon que son axe (X2) soit dans ce plan vertical, de façon à minimiser les efforts exercés sur la bielle de commande (21).

5. Train d'atterrissage selon la revendication 4, caractérisé en ce qu'en position train bas, la bielle de commande (21) est disposée dans un plan essentiellement horizontal.

6. Train d'atterrissage selon l'une des revendications 3 à 5, caractérisé en ce que le caisson rigide (10) comporte deux appendices d'articulation (18.1, 18.2) dont l'un (18.1) est associé à l'amortisseur (15.1) du balancier avant et l'autre (18.2) au basculeur (20), qui sont agencés symétriquement par rapport au plan de symétrie (P) du caisson.

7. Train d'atterrissage selon la revendication 6, caractérisé en ce que les deux appendices d'articulation (18.1, 18.2) sont calés sur un axe commun (19) qui est parallèle à l'axe de pivotement (11) du caisson rigide (10), lequel axe est sensiblement parallèle à l'axe central de l'aéronef.

8. Train d'atterrissage selon l'une des revendications 1 à 7, dans lequel des moyens de contreventement sont associés à la jambe de train, caractérisé en ce qu'il comporte une contre-fiche articulée (36) dont les deux bras (37, 38) sont dans le plan de symétrie (P) du caisson rigide (10), et ce dans toutes les positions angulaires dudit caisson.

9. Train d'atterrissage selon la revendication 8, caractérisé en ce qu'une contre-fiche secondaire d'alignement (41) est en outre prévue entre la contre-fiche précitée (36) et le caisson rigide (10), cette contre-fiche secondaire (41) restant également dans le plan de symétrie (P) dudit caisson.

10. Train d'atterrissage selon l'une des revendications 1 à 9, caractérisé en ce qu'il comporte en outre deux bielles (25.1, 25.2) de reprise d'efforts, articulées en extrémité du caisson rigide (10) et sur un point fixe respectif d'une couronne de frein associée à la roue concernée, ces deux bielles (25.1, 25.2) étant agencées au voisinage des deux balanciers (12.1, 12.2) en formant avec ces derniers un parallélogramme articulé.

11. Train d'atterrissage selon l'une des revendications 1 à 10, caractérisé en ce que le vérin de manoeuvre (30) relie un appendice supérieur (33) du caisson rigide (10) à la structure d'aéronef en s'étendant dans un plan décalé par rapport au plan de symétrie (P) dudit caisson.
